# FASCICULE DE BREVET EUROPEEN

(11) **EP 0 893 415 B1**
(45) Date de publication et mention de la délivrance du brevet: **24.01.2001**
(21) Numéro de dépôt: 98401747.5
(22) Date de dépôt: 09.07.1998
(51) Int. Cl.: C03B 37/027, G01B 11/10

(54) **Dispositif de fibrage d'une fibre optique comportant un capteur de diamètre à précision élevée**
Ziehvorrichtung für optische Fasern mit einem Diametersensor hoher Genauigkeit
Apparatus for drawing an optical fibre comprising a diameter sensor of high precision

(30) Priorité: 24.07.1997 FR 9709417
(43) Date de publication de la demande: 27.01.1999
(73) Titulaire: ALCATEL, 75008 Paris (FR)
(72) Inventeur: Maurin, Laurent, 62218 Loison-sous-Lens (FR)
(74) Mandataire: Buffière, Michelle

(56) Documents cités:
- EP-A- 0 294 889
- EP-A- 0 736 747

## Description

L'invention concerne un dispositif de fibrage d'une fibre optique à partir d'une préforme, comprenant un four pour porter à fusion une extrémité de la préforme de laquelle est étirée la fibre optique et un capteur optique disposé en sortie du four pour mesurer le diamètre de la fibre optique afin de régler une vitesse et une tension de fibrage.

Dans un tel dispositif, comme il est décrit dans le document EP-A-736747, la préforme est en général constituée de silice et est déplacée lentement en translation à l'intérieur du four. Ce dernier apporte une énergie nécessaire à la fusion d'un cône de fibrage situé à une extrémité de la préforme d'où est étirée la fibre optique par un moyen de tirage.

Le diamètre de la fibre optique dépend de la vitesse et de la tension de fibrage appliquées à la fibre optique par le moyen de tirage D'une manière connue, le capteur optique est dispose en sortie du four pour contrôler la formation de la fibre optique et régler rapidement la vitesse et la tension de fibrage pour garantir un diamètre à l'intérieur d'un intervalle de tolérances.

Lorsque le capteur optique détecte un diamètre de fibre en dehors de l'intervalle de tolérance révélateur d'un défaut, la fibre optique est découpée de part et d'autre du point de mesure. A l'heure actuelle, une fibre optique doit avoir au minimum sur, une longueur de 2,2 kilomètres (km) une tolérance sur le diametre de plus ou moins 2 microns (µm) par rapport à un diamètre moyen de 125 µm. Il est à prévoir pour l'avenir une longueur commerciale minimale de 5 km et une tolérance de plus ou moins 1 µm.

Le capteur optique effectue une mesure de diamètre selon un principe connu consistant à éclairer la fibre optique par une source de lumière et à mesurer l'ombre projetée par le diamètre de la fibre optique sur un récepteur à photodiodes. Le capteur présente ainsi l'avantage d'un point de mesure sans contact mécanique. L'ombre est engendrée d'une manière dynamique par balayage d'un faisceau laser effectuant un aller et un retour devant la fibre optique à une fréquence par exemple égale à 1000 hertz (Hz). La mesure du diamètre est ainsi affranchie d'une incertitude due à une vibration de la fibre optique entre le four et le moyen de tirage à une fréquence typiquement inférieure à 10 Hz.

La précision de mesure du capteur optique doit être en rapport avec l'intervalle de tolérances de manière à ne pas entraîner de découpe de la fibre optique à la suite d'artefacts de mesure. Des essais réalisés sur site à l'aide d'un dispositif du type de celui qui vient d'être décrit ont montré que la précision de mesure du diamètre de la fibre optique mesuré pendant l'étirage était incompatible avec le procédé d'étirage, en étant environ 5 fois inférieure à la précision obtenue lors d'essais réalisés hors site avec le même capteur optique et sur des échantillons de la même fibre optique. L'expression hors site signifie que le capteur optique est disposé à l'écart du dispositif de fibrage, les échantillons étant en position immobile devant le capteur optique.

Le but de l'invention est d'améliorer la précision de mesure d'un capteur optique disposé à proximité du four d'un dispositif de fibrage.

A cet effet, l'invention a pour objet un dispositif de fibrage d'une fibre optique à partir d'une préforme, comprenant un four pour porter à fusion une extrémité de la préforme de laquelle est étirée la fibre optique et un capteur optique disposé en sortie du four pour mesurer le diamètre de la fibre optique afin de régler la vitesse et la tension de fibrage, caractérisé en ce que le capteur optique est entouré d'un cache formant une chambre noire traversée par la fibre optique.

D'autres caractéristiques et avantages de l'invention apparaîtront à la lecture de la description d'un mode de réalisation de l'invention illustré par les dessins.

La figure 1 est une vue d'ensemble du dispositif selon l'invention.

La figure 2 est un relevé expérimental d'un taux cumulé de défauts détectés par un capteur optique comparant un dispositif de l'art antérieur et un dispositif selon l'invention.

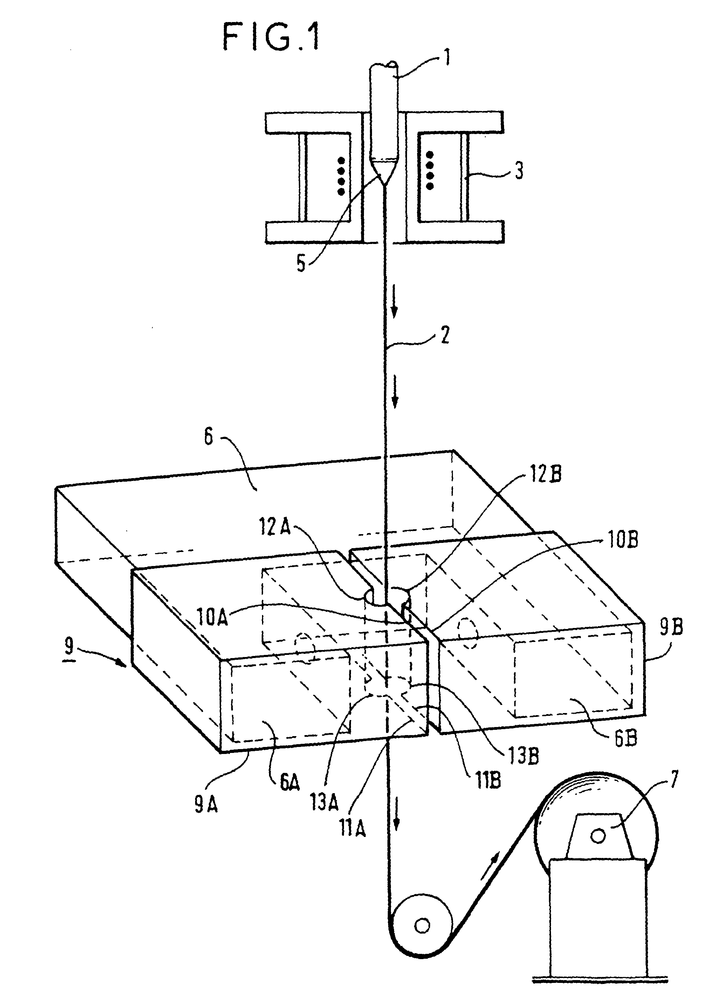

Le dispositif selon l'invention comprend, figure 1, une préforme 1 constituée en général de silice et déplacée lentement en translation dans un four 3 par exemple à induction. Le four fournit l'énergie nécessaire à la fusion vers 2000 degrés Celsius d'une extrémité de la préforme en contact avec un cône de fibrage 5 d'où une fibre optique 2 est étirée par un moyen de tirage 7.

Un capteur optique 6 est disposé en sortie du four, à une distance inférieure à 100 centimètres (cm). A titre d'exemple, le four et le capteur optique sont distants de 40 cm. Le capteur optique possède par exemple deux branches 6A et 6B formant un entrefer dans lequel défile la fibre optique étirée du cône de fibrage. Le fonctionnement du capteur optique est fondé sur un principe connu de mesure d'ombre tel décrit précédemment.

Un cache 9 constitué d'un matériau non transparent aux rayons lumineux allant des infrarouges aux ultraviolets entoure le capteur optique au moins sur les deux branches. Il forme une chambre noire traversée par la fibre optique.

De préférence, le cache comprend deux parties 9A et 98 mobiles par rapport aux deux branches du capteur optique. Les deux parties se rejoignent par deux paires de bords 10A et 10B, et 11A et 11B. Deux d'orifices sont formés à travers le cache pour permettre le défilement de la fibre optique et comprennent chacun deux trous semi-circulaires 12A et 12B, respectivement 13A et 13B, ménagés sur les deux bords.

Des rayons lumineux extérieurs tombant sur le capteur optique, et particulièrement des rayons émis par le four, sont réfléchis ou absorbés par les deux parties 9A et 9B du cache formant chambre noire.

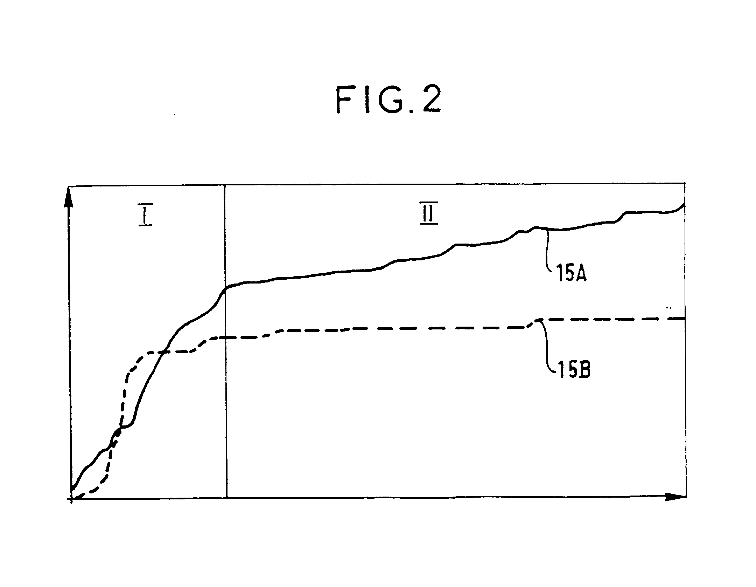

Figure 2, un relevé expérimental du taux cumulé de défauts compare un dispositif de l'art antérieur et un dispositif selon l'invention. En abscisses est portée une longueur de fibre optiaue comptée en tranches de longueur, et en ordonnées, un cumul de défauts détectés par tranches à l'aide d'un capteur optique à mesure d'ombre tel décrit précédemment. Des défauts égaux ou supérieurs à 1 um par rapport au diamètre moyen de la fibre optique sont cumulés par valeur supérieure sur une courbe 15A et par valeur inférieure sur une courbe 15B. Les deux courbes montrent un cumul important des défauts dans une portion I du relevé obtenue en l'absence de cache, et un cumul faible dans une portion II du relevé obtenue en présence du cache entourant le capteur optique.

Ce relevé illustre une amélioration très nette de la précision de mesure de diamètre sur la fibre optique dans un dispositif selon l'invention. Le cache protège le capteur optique de rayonnements de sources lumineuses ambiantes, notamment des rayons émis par le four de fibrage, qui provoquent ponctuellement des artefacts de mesure. Il améliore la précision de mesure du diamètre de la fibre optique d'où il résulte une diminution du taux de découpe de la fibre optique par élimination des artefacts.

## Revendications

1. Un dispositif de fibrage d'une fibre optique à partir d'une préforme, comprenant un four (3) pour porter à fusion une extrémité de la préforme (1) de laquelle est étirée la fibre optique (2) et un capteur optique (6) disposé en sortie du four (3) pour mesurer le diamètre de la fibre optique afin de régler la vitesse et la tension de fibrage, caractérisé en ce que le capteur optique est entouré d'un cache (9) formant une chambre noire traversée par la fibre optique (2).

2. Le dispositif selon la revendication 1, dans lequel le cache (9) comprend deux parties (9A, 9B) mobiles par rapport à deux branches (6A, 6B) du capteur optique (6).

3. Le dispositif selon la revendication 1 ou 2, dans lequel le four (3) et le capteur optique (6) sont séparés d'une distance inférieure à100 cm.

4. Le dispositif selon l'une des revendications précédentes, dans lequel le cache (9) est constitué d'un matériau non transparent aux rayons lumineux allant des infrarouges aux ultraviolets.

## Claims

1. A device for drawing an optical fibre from a preform, comprising a furnace (3) for melting one end of the preform (1) from which the optical fibre (2) is drawn and an optical sensor (6) disposed at the exit from the furnace (3) to measure the diameter of the optical fibre in order to adjust the drawing speed and the drawing tension, characterized in that the optical sensor is surrounded by a mask (9) forming a dark chamber through which the optical fibre (2) passes.

2. A device according to claim 1, characterized in that the mask (9) comprises two parts (9A, 9B) mobile relative to two branches (6A, 6B) of the optical sensor (6).

3. A device according to claim 1 or claim 2, characterized in that the furnace (3) and the optical sensor (6) are less than 100 cm apart.

4. A device according to any one of the preceding claims, characterized in that the mask (9) is made of a material that is not transparent to light rays from infrared through ultraviolet.

## Patentansprüche

1. Ziehvorrichtung für optische Fasern ausgehend von einem Rohling, die einen Ofen (3), um ein Ende des Rohlings (1) zum Schmelzen zu bringen, von welchem die optische Faser (2) gezogen wird, und einen am Ausgang des Ofens (3) angeordneten optischen Sensor (6) zum Messen des Durchmessers der optischen Faser umfaßt, um die Ziehgeschwindigkeit und -spannung zu regeln, dadurch gekennzeichnet, daß der optische Sensor von einer Verkleidung (9) umgeben ist, die ein von der optischen Faser (2) durchlaufenes Gehäuse bildet.

2. Vorrichtung nach Anspruch 1, bei welcher die Verkleidung (9) zwei gegenüber den beiden Schenkeln (6A, 6B) des optischen Sensors (6) beweglichen Teile (9A, 9B) umfaßt.

3. Vorrichtung nach Anspruch 1 oder 2, bei welcher der Ofen (3) und der optische Sensor (6) durch einen Abstand von weniger als 100 cm voneinander getrennt sind.

4. Vorrichtung nach einem der vorhergehenden Ansprüche, bei welcher die Verkleidung (9) aus einem für Lichtstrahlen, die von den infraroten bis zu den ultravioletten reichen, nicht durchlässigem Material besteht.
